(19) Europäisches Patentamt / European Patent Office / Office européen des brevets

(11) **EP 3 280 171 B1**

(12) **EUROPEAN PATENT SPECIFICATION**

(45) Date of publication and mention
of the grant of the patent:
**01.05.2019 Bulletin 2019/18**

(51) Int Cl.:
**H04W 28/02** (2009.01)         **H04W 24/02** (2009.01)
**H04W 36/22** (2009.01)

(21) Application number: **16182549.2**

(22) Date of filing: **03.08.2016**

(54) **DEVICES AND METHOD FOR LOAD BALANCING OPERATION OF A BASE STATION OF A CELLULAR COMMUNICATION NETWORK**

VORRICHTUNGEN UND VERFAHREN ZUR LASTBALANZIERUNG EINER BASISSTATION EINES ZELLULAREN KOMMUNIKATIONSNETZES

DISPOSITIFS ET PROCÉDÉ D'ÉQUILIBRAGE DE CHARGE D'UNE STATION DE BASE D'UN RÉSEAU DE COMMUNICATION CELLULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.02.2018 Bulletin 2018/06**

(73) Proprietor: **Deutsche Telekom AG
53113 Bonn (DE)**

(72) Inventors:
• **LOSSOW, Moritz
  10557 Berlin (DE)**
• **KADEL, Gerhard
  64293 Darmstadt (DE)**
• **DROSTE, Heinrich
  64380 Rossdorf (DE)**

(74) Representative: **Patentship
Patentanwaltsgesellschaft mbH
Elsenheimerstraße 65
80687 München (DE)**

(56) References cited:
**WO-A1-2014/146700**

• **ZIA NAUMAN ET AL: "A policy based conflict resolution mechanism for MLB and MRO in LTE self-optimizing networks", 2014 IEEE SYMPOSIUM ON COMPUTERS AND COMMUNICATIONS (ISCC), IEEE, 23 June 2014 (2014-06-23), pages 1-6, XP032649841, DOI: 10.1109/ISCC.2014.6912543 [retrieved on 2014-09-26]**
• **DONGMEI ZHAO: "WLC30-1: Achieving Fair Throughput in Infrastructure-Based IEEE 802.11 Mesh Networks", IEEE GLOBECOM 2006 : 2006 GLOBAL TELECOMMUNICATIONS CONFERENCE ; SAN FRANCISCO, CA, USA, 27 NOVEMBER - 1 DECEMBER 2006, IEEE, PISCATAWAY, NJ, 1 November 2006 (2006-11-01), pages 1-6, XP031075789, ISBN: 978-1-4244-0356-1**
• **NTT DOCOMO ET AL: "User throughput performance of different CA policies", 3GPP DRAFT; R2-104731 CA PERFORMANCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823 - 20100827, 17 August 2010 (2010-08-17), XP050605354, [retrieved on 2010-08-17]**

**Description**

TECHNICAL FIELD

In general, the invention relates to cellular communication networks. More specifically, the invention relates to devices and methods for operating a base station of a cellular communication network.

BACKGROUND

Mobile Internet services are growing rapidly and cellular radio communication networks are an important infrastructure for providing these services to users. One of the main goals of a mobile network operator (MNO) is to provide its customers with a good user experience, for instance, in terms of perceived data rates for web browsing, download or streaming services. At the same time, however, a MNO generally will try to attract as many customers as possible for the services provided by the MNO.

Since a cellular radio communication network is a shared medium, the goals mentioned above are somewhat contradicting: If there are only a few users in a cell of a cellular communication network, the perceived user experience of these users is generally very good; however, if more and more users are using services in a cell of the cellular communication network at the same time, the system load on the network will significantly increase and the perceived user experience will significantly degrade.

WO 2014/146700 A1 describes a system for antenna optimization in a cellular communication network based on vertical sectorization. An optimization scheme is disclosed, according to which the usage of TTI (transmit time interval) resources within an inner sector and an outer sector of a cell of the cellular communication network is optimized by electronically tilting an antenna.

Thus, there is a need for a concept reconciling these contradicting goals in a cellular communication network as much as possible.

SUMMARY OF THE INVENTION

It is an object of the invention to provide improved devices and methods for operating a base station of a cellular communication network.

The foregoing and other objects are achieved by the subject matter of the independent claims. Further implementation forms are apparent from the dependent claims, the description and the figures.

The invention is based on the general idea of using a weighted product of a median user throughput and the number of user equipments in a cell as a performance metric for determining an optimum system load of a base station. Thus, the system load in cellular systems may be optimized by applying load balancing or adapting network functions providing adequate spectral efficiency. The invention allows to operate a base station with the optimum system load (or at least close thereto), thereby minimizing energy consumption and hardware effort in the overall system (even in neighboring cells). The invention is especially suited to be implemented in the context of Network function Virtualization (NFV) and/or Software Defined Networking (SDN) services provided in future 5G network architectures.

Thus, according to a first aspect the invention relates to a method of operating a base station of a cellular communication network. The method comprises the steps of operating the base station to communicate with a first number of user equipments defining a first median user throughput, wherein the first number of user equipments and the first median user throughput correspond to a first system load of the base station; and adjusting the first system load of the base station, in case the first system load of the base station differs from an optimum system load of the base station, wherein the optimum system load of the base station is defined by a performance metric T, in particular by a maximum thereof, wherein the performance metric T is based on a weighted product of the number of user equipments and the median user throughput.

In an embodiment, the performance metric T is defined by the following equation or variants thereof:

$$T = N_{User}{}^{1-\rho} * \bar{\bar{T}}_{PU}{}^{\rho},$$

wherein $N_{User}$ denotes the number of user equipments, $\bar{T}_{PU}$ denotes the median user throughput and $\rho$ denotes a pre-defined weighting parameter in the range from 0 to 1.

In an embodiment, the method comprises the further step of dynamically adjusting the pre-defined weighting parameter $\rho$ in response to changing conditions of the cellular communication network.

In an embodiment, the cellular communication network can be an LTE network and the system load of the base station is defined by the fraction of physical resources blocks used by the base station.

In an embodiment, the system load of the base station is a time-averaged system load of the base station.

In an embodiment, the step of adjusting the first system load comprises the step of reducing the first system load by reducing the first number of user equipments, in case the first system load of the base station is larger than the optimum system load of the base station.

In an embodiment, the step of reducing the first number of user equipments comprises the step of offloading one or more of the first number of user equipments to a neighbouring base station.

In an embodiment, the step of adjusting the first system load comprises the step of increasing the first system load, in case the first system load of the base station is smaller than the optimum system load of the base station.

In an embodiment, the step of increasing the first system load comprises the step of deactivating at least one antenna of a plurality of antennas of the base station or reducing the bandwidth available for the base station for communicating with the first number of user equipments.

According to a second aspect the invention relates to a control device for operating a base station of a cellular communication network. The control device comprises a processor configured to operate the base station to communicate with a first number of user equipments defining a first median user throughput, wherein the first number of user equipments and the first median user throughput correspond to a first system load of the base station, wherein the processor is further configured to adjust the first system load of the base station, in case the first system load of the base station differs from an optimum system load of the base station, wherein the optimum system load of the base station is defined by a performance metric $T$, in particular by a maximum thereof, wherein the performance metric is based on a weighted product of the number of user equipments and the median user throughput.

In an embodiment, the performance metric $T$ is defined by the following equation or variants thereof:

$$T = N_{User}{}^{1-\rho} * \bar{T}_{PU}{}^{\rho},$$

wherein $N_{User}$ denotes the number of user equipments, $\bar{T}_{PU}$ denotes the median user throughput and $\rho$ denotes a pre-defined weighting parameter in the range from 0 to 1, and different from 0 or 1.

In an embodiment, the processor is further configured to dynamically adjust the pre-defined weighting parameter $\rho$ in response to changing conditions of the cellular communication network.

In an embodiment, the cellular communication network is an LTE network and the system load of the base station is defined by the fraction of physical resources blocks used by the base station.

In an embodiment, the processor is configured to determine the system load of the base station as a time-averaged system load of the base station.

In an embodiment, the processor is configured to adjust the first system load by reducing the first system load by reducing the first number of user equipments, in case the first system load of the base station is larger than the optimum system load of the base station.

In an embodiment, the processor is configured to reduce the first number of user equipments by offloading one or more of the first number of user equipments to a neighbouring base station.

In an embodiment, the processor is configured to adjust the first system load by increasing the first system load, in case the first system load of the base station is smaller than the optimum system load of the base station.

In an embodiment, the processor is configured to increase the first system load by deactivating at least one antenna of a plurality of antennas of the base station or reducing the bandwidth available for the base station for communicating with the first number of user equipments.

According to a third aspect the invention relates to a base station comprising a control device according to the second aspect of the invention.

The invention can be implemented in hardware and/or software.

BRIEF DESCRIPTION OF THE DRAWINGS

Further embodiments of the invention will be described with respect to the following figures, wherein:

Fig. 1 shows a schematic diagram illustrating a cellular communication network comprising a base station according to an embodiment;

Fig. 2 shows a graph of a performance metric as a function of the system load implemented in the base station of figure 1 for a first weighting parameter;

Fig. 3 shows a graph of a performance metric as a function of the system load implemented in the base station of figure 1 for a second weighting parameter;

Fig. 4 shows a graph of a performance metric as a function of the system load implemented in the base station of figure 1 for a third weighting parameter; and

Fig. 5 shows a schematic diagram illustrating a method for operating a base station of a cellular communication network according to an embodiment.

In the various figures, identical reference signs will be used for identical or at least functionally equivalent features.

DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

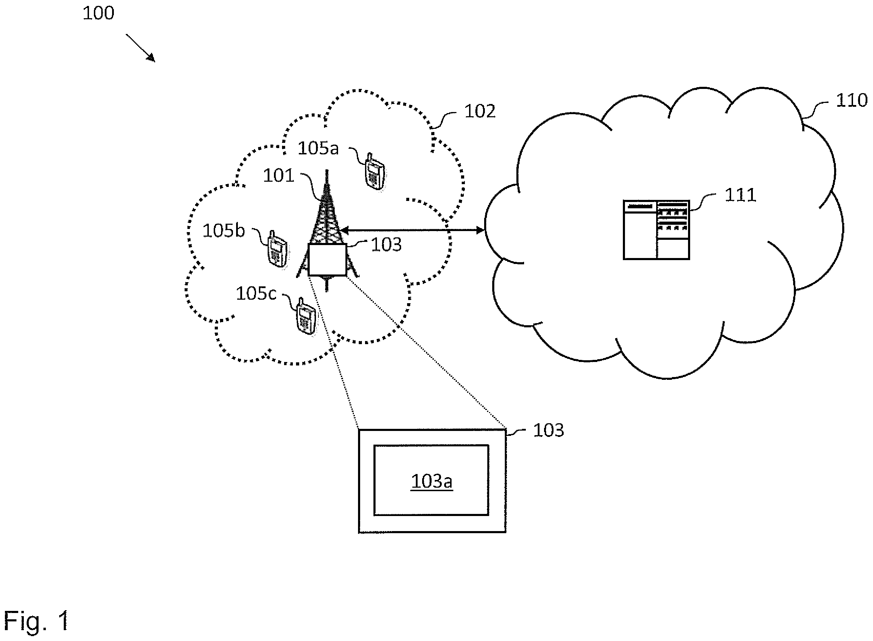

Figure 1 shows a schematic diagram of a cellular communication network 100. The cellular communication network 100 is configured to provide mobile communication services to users. In an embodiment, the cellular communication network can be based on a 3GPP standard, such as 3G, 4G or 5G.

The cellular communication network 100 comprises a base station 101 in communication with an access network 110. For the sake of clarity only one base station 101 is shown in figure 1. In other embodiments the cellular communication network 101 can comprises a plurality of base stations similar to the base station 101, which will be described in more detail further below.

The base station 101 defines a radio cell 102 and is configured to communicate with a plurality of user equipments 105a-c, such as smartphones, located within the radio cell 102 via the radio interface. In an embodiment, the base station 101 is an evolved node B.

In the embodiment shown in figure 1, the base station 101 comprises a control device 103. In an embodiment, the control device 103 can be an entity separate from the base station 101. In an embodiment, the control device 103 can be arranged within the access network 110 of the cellular communication network 100, for instance, as part of a server 111 of the access network 110.

The control device 103 is configured to operate the base station 101 of the cellular communication network 100. As can be taken from the detailed view shown in figure 1, the control device 103 comprises a processor 103a.

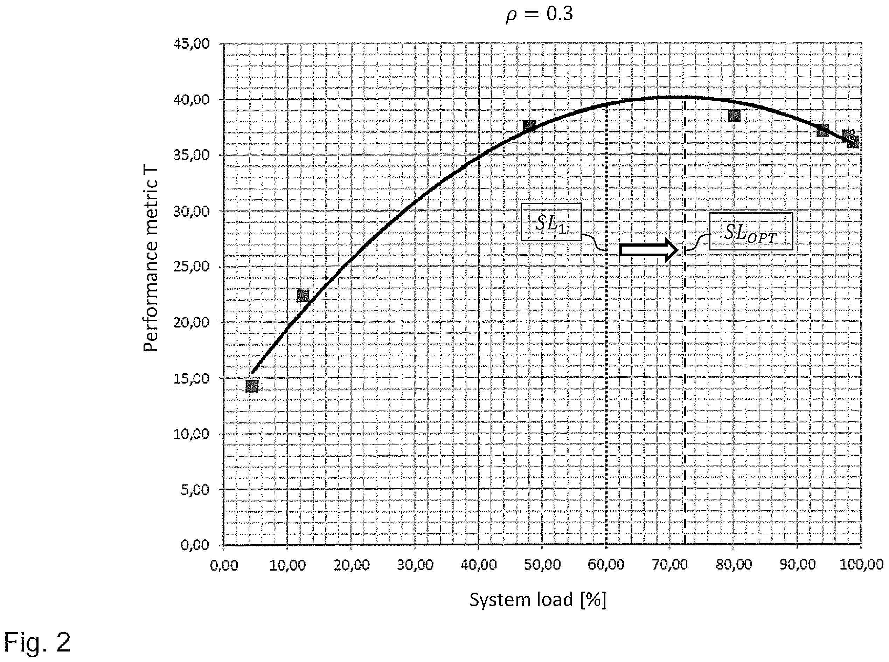

The processor 103a is configured to operate the base station 101 to communicate with a first number of user equipments 105a-c using, i.e. defining a first median user throughput, wherein the first number of user equipments 105a-c and the first median user throughput corresponds to a first system load $SL_1$ of the base station 101. The processor 103a is further configured to adjust the first system load $SL_1$ of the base station 101, in case the first system load $SL_1$ of the base station 101 differs from an optimum system load $SL_{OPT}$ of the base station 101, as will be described in more detail further below in the context of figures 2 to 4.

As used herein, the user throughput defines the average data/download rate of a user equipment 105a-c, for instance, when downloading a file. Generally, different user equipments 105a-c will experience different user throughputs so that a plurality of user equipments in communication with the base station 101, i.e. the first number of user equipments 105a-c defines a distribution of user throughputs, which, in turn, defines a median of the distribution of user throughputs, i.e. a median user throughput.

In an embodiment, the cellular communication network 100 is an LTE (4G) network and the system load of the base station 101 can be defined by the fraction of physical resources blocks used by the base station 101. In an embodiment, this quantity can be measured by the base station 101. In an embodiment, the processor 103a is configured to determine the system load of the base station 101 as a time-averaged system load of the base station 101, for instance, averaged over time periods of minutes or hours.

Figures 2 to 4 show respective graphs of a performance metric as a function of the system load implemented in the processor 103a of the control device 103 for three different weighting parameters. The processor 103a is configured to adjust the first system load $SL_1$ of the base station 101 on the basis of the performance metric $T$, which is shown in figures 2 to 4 and which can be expressed as follows:

$$T = N_{User}^{1-\rho} * \overline{T}_{PU}^{\rho}, \qquad (1)$$

wherein $N_{User}$ denotes the number of user equipments 105a-c, $\overline{T}_{PU}$ denotes the median user throughput and $\rho$ denotes the pre-defined weighting parameter in the range from 0 to 1. By way of example, in the respective figures 2 to 4 the pre-defined weighting parameter p has been chosen to have a value of 0.3, 0.5 and 0.7, respectively. The performance metric T defined in equation (1) is one possible embodiment. Other possible embodiments of the invention, where the performance metric $T$ is based on a weighted product of the number of user equipments 105a-c, i.e. $N_{User}$, and the median user throughput $\overline{T}_{PU}$, are based on variants of equation (1), such as a performance metric $T$ defined, for instance, by the square or the square root of equation (1).

By way of example, in figures 2 to 4 the control device 103 initially operates the base station 101 to communicate with a first number of user equipments 105a-c using a first median user throughput corresponding to a first system load $SL_1$ of the base station 101 of about 60%.

For the choice of the weighting parameter $\rho$ = 0.3 shown in figure 2, the system load $SL_1$ of the base station 101 of about 60% is smaller than the optimum system load $SL_{OPT}$ of the base station 101 of about 72%, as defined by the maximum of the performance metric $T$. Thus, according to the invention, the processor 103a will try to increase the system load of the base station 101. In an embodiment, the processor 103a is configured to increase the system load of the base station 101 by deactivating at least one antenna of a plurality of antennas of the base station 101, reducing the bandwidth available for the base station 101 for communicating with the number of user equipments 105a-c and/or by deactivating or reducing another resource of the base station 101 that affects the system load.

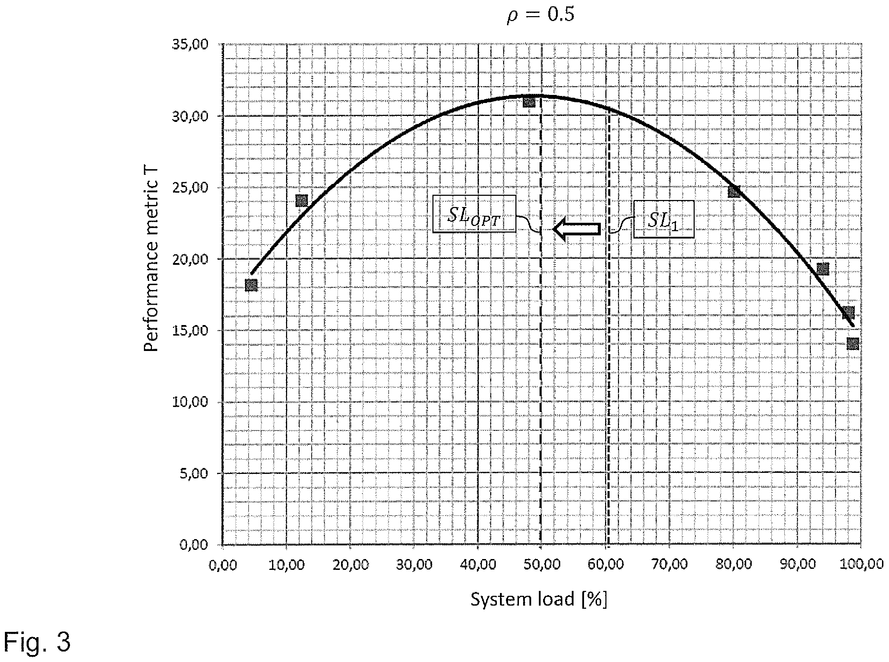

For the choice of the weighting parameter $\rho$ = 0.5 shown in figure 3, the system load $SL_1$ of the base station 101 of about 60% is larger than the optimum system load $SL_{OPT}$ of the base station 101 of about 50%, as defined by the maximum of the performance metric $T$. Thus, according to the invention, the processor 103a will try to decrease the system load of the base station 101, for instance, by decreasing the first number of user equipments 105a-c, i.e. the number of user equipments in communication with or attached to the base station 101. In an embodiment, the processor 103a is configured to reduce the first number of user equipments 105a-c by offloading one or more of the first number of user equipments 105a-c to a neighbouring base station.

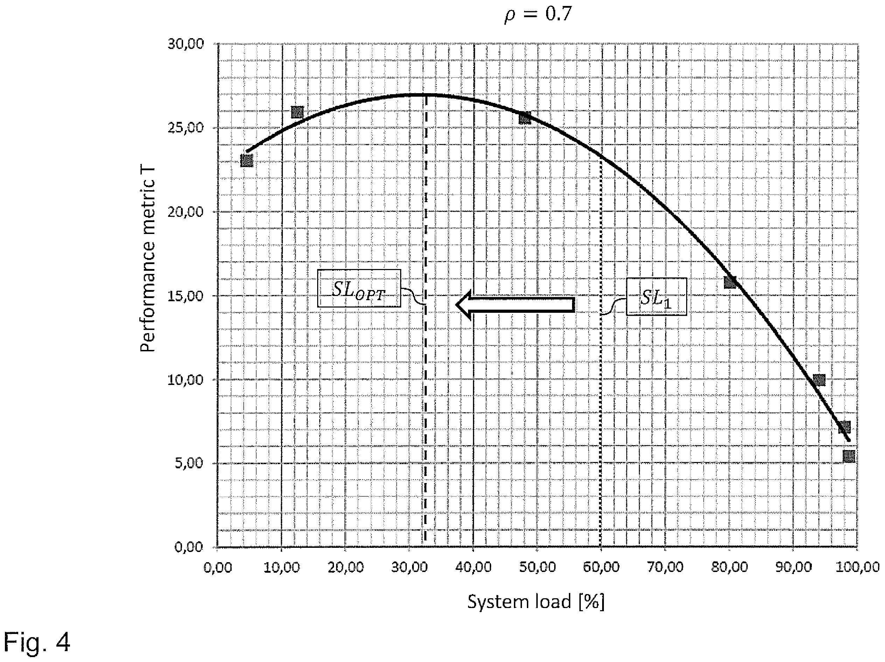

For the choice of the weighting parameter $\rho$ = 0.7 shown in figure 4, the system load $SL_1$ of the base station 101 of about 60% is larger than the optimum system load $SL_{OPT}$ of the base station 101 of about 32%, as defined by the maximum of the performance metric $T$. Thus, also in this case the processor 103a will try to decrease the system load of the base station 101, for instance, by decreasing the first number of user equipments 105a-c, i.e. the number of user equipments in communication with or attached to the base station 101. In an embodiment, this decrease of the first number of user equipments 105a-c will be larger than the decrease of figure 3, where the difference between the first system load $SL_1$ and the optimum system load $SL_{OPT}$ of the base station 101 was smaller than in the case of figure 4.

In an embodiment, the processor 103a is further configured to dynamically adjust the pre-defined weighting parameter p in response to changing conditions of the cellular communication network 100. For instance, the weighting parameter p can be changed, e.g. based on different Quality Levels assigned to the users, leading to different system loads in order to achieve an optimum for the metric.

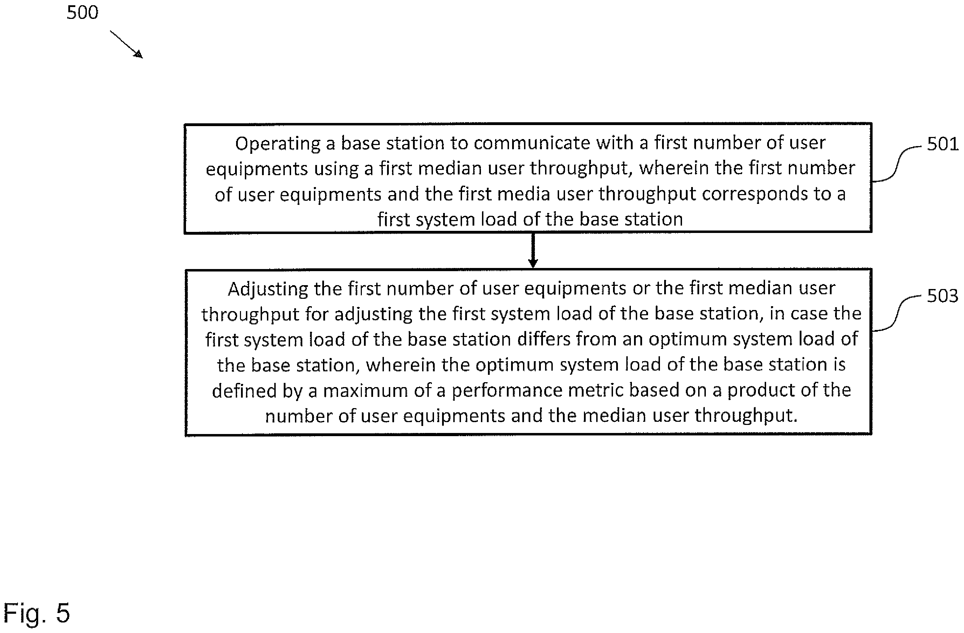

Figure 5 shows a schematic diagram illustrating a corresponding method 500 for operating the base station 101 of the cellular communication network 100 according to an embodiment. The method 500 comprises a first step 501 of operating the base station 101 to communicate with a first number of user equipments 105a-c defining a first median user throughput, wherein the first number of user equipments 105a-c and the first media user throughput correspond to a first system load $SL_1$ of the base station 101.

Moreover, the method 500 comprises a second step 503 of adjusting the first system load $SL_1$ of the base station 101, in case the first system load $SL_1$ of the base station 101 differs from an optimum system load $SL_{OPT}$ of the base station 101, wherein the optimum system load $SL_{OPT}$ of the base station 101 is defined by a performance metric $T$, in particular by a maximum thereof, wherein the performance metric $T$ is based on a weighted product of the number of user equipments and the median user throughput.

In an embodiment, the performance metric T is defined by the following equation:

$$T = N_{User}{}^{1-\rho} * \overline{T}_{PU}{}^{\rho},$$

wherein $N_{User}$ denotes the number of user equipments 105a-c, $\overline{T}_{PU}$ denotes the median user throughput and $\rho$ denotes a pre-defined weighting parameter in the range from 0 to 1, and different from 0 or 1.

Embodiments of the invention are independent of the radio network technology and could be applied, for instance, in 4G as well as future 5G networks. In general, embodiments of the invention provide optimal system loads for operating a base station. Furthermore, embodiments of the invention allow determining maximum system loads for the application of either traffic/user offloading methods or new base station deployments, like e.g. additional small cells. In 5G networks, the flexibility offered by Network function Virtualization (NFV) and Software Defined Networks (SDN) allows a fast reaction, in terms of added new wireless transmission resources, if the estimated optimal system load is exceeded.

As already described above, the optimization scheme provided by embodiments of the invention may occur on a per cell basis or for several neighboring cells instantly considering optimum cumulated median user throughput and fluctuating number of active users.

Embodiments of the invention allow network operators monitoring the long term evolution of the performance metric and can predict optimum time for network expansions. For instance, embodiments of the invention allow identifying cells that work above its optimum, in particular in a sense that the system load is too high. These cell areas would be candidates for future network extension (e.g. small cells) to ensure a good quality of experience for the user.

Other embodiments of the invention allow for short term reactions on fluctuations of the performance metric. For instance, if the performance metric goes below its optimum because of too high cell load, a dynamic "offloading" can be initiated by allocation of user equipment to neighboring cells (load balancing).

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

**Claims**

1. A method (500) of operating a base station (101) of a cellular communication network (100), the method (500) comprising:

   operating (501) the base station (101) to communicate with a first number of user equipments (105a-c) defining a first median user throughput, wherein the first number of user equipments (105a-c) and the first median user throughput correspond to a first system load ($SL_1$) of the base station (101); and
   adjusting (503) the first system load ($SL_1$) of the base station (101), in case the first system load ($SL_1$) of the base station (101) differs from an optimum system load ($SL_{OPT}$) of the base station (101), wherein the optimum system load ($SL_{OPT}$) of the base station (101) is defined by a performance metric $T$, **characterized in that** the performance metric $T$ is based on a weighted product of the number of user equipments (105a-c) and the median user throughput.

2. The method (500) of claim 1, wherein the performance metric T is defined by the following equation:

$$T = N_{User}^{1-\rho} * \bar{T}_{PU}^{\rho},$$

wherein $N_{User}$ denotes the number of user equipments (105a-c), $\bar{T}_{PU}$ denotes the median user throughput and $\rho$ denotes a pre-defined weighting parameter in the range from 0 to 1, and different from 0 or 1.

3. The method (500) of claim 2, wherein the method (500) comprises the further step of dynamically adjusting the pre-defined weighting parameter $\rho$ in response to changing conditions of the cellular communication network (100) or to changing requirements of the network operator.

4. The method (500) of any one of the preceding claims, wherein the cellular communication network (100) is an LTE network and wherein the system load of the base station (101) is defined by the fraction of physical resources blocks used by the base station (101).

5. The method (500) of any one of the preceding claims, wherein the system load of the base station (101) is a time-averaged system load of the base station (101).

6. The method (500) of any one of the preceding claims, wherein the step (503) of adjusting the first system load ($SL_1$) comprises the step of reducing the first system load ($SL_1$) by reducing the first number of user equipments (105a-c), in case the first system load ($SL_1$) of the base station (101) is larger than the optimum system load ($SL_{OPT}$) of the base station (101).

7. The method (500) of claim 6, wherein the step of reducing the first number of user equipments (105a-c) comprises the step of offloading one or more of the first number of user equipments (105a-c) to a neighbouring base station.

8. The method (500) of any one of the preceding claims, wherein the step of adjusting the first system load ($SL_1$) comprises the step of increasing the first system load in case the first system load ($SL_1$) of the base station (101) is smaller than the optimum system load ($SL_{OPT}$) of the base station (101).

9. The method (500) of claim 8, wherein the step of increasing the first system load ($SL_1$) comprises the

step of deactivating at least one antenna of a plurality of antennas of the base station (101) or reducing the bandwidth available for the base station (101) for communicating with the first number of user equipments (105a-c).

10. A control device (103) for operating a base station (101) of a cellular communication network (100), the control device (103) comprising:

a processor (103a) configured to operate the base station (101) to communicate with a first number of user equipments (105a-c) defining a first median user throughput, wherein the first number of user equipments (105a-c) and the first median user throughput correspond to a first system load ($SL_1$) of the base station (101); wherein the processor (103a) is further configured to adjust the first system load ($SL_1$) of the base station (101), in case the first system load ($SL_1$) of the base station (101) differs from an optimum system load ($SL_{OPT}$) of the base station (101), wherein the optimum system load ($SL_{OPT}$) of the base station (101) is defined by a performance metric *T*, **characterized in that** the performance metric *T* is based on a weighted product of the number of user equipments (105a-c) and the median user throughput.

11. The control device (103) of claim 10, wherein the performance metric *T* is defined by the following equation:

$$T = N_{User}^{1-\rho} * \bar{T}_{PU}^{\rho},$$

wherein $N_{User}$ denotes the number of user equipments (105a-c), $\bar{T}_{PU}$ denotes the median user throughput and $\rho$ denotes a pre-defined weighting parameter in the range from 0 to 1, and different from 0 or 1.

12. The control device (103) of claim 11, wherein the processor (103a) is further configured to dynamically adjust the pre-defined weighting parameter $\rho$ in response to changing conditions of the cellular communication network (100).

13. The control device (103) of any one of claims 10 to 12, wherein the cellular communication network (100) is an LTE network and wherein the system load of the base station (101) is defined by the fraction of physical resources blocks used by the base station (101).

14. The control device (103) of any one of claims 10 to 13, wherein the processor (103a) is configured to determine the system load of the base station (101) as a time-averaged system load of the base station (101).

15. The control device (103) of any one of claims 10 to 14, wherein the processor (103a) is configured to adjust the first system load ($SL_1$) by reducing the first system load ($SL_1$) by reducing the first number of user equipments (105a-c), in case the first system load ($SL_1$) of the base station (101) is larger than the optimum system load ($SL_{OPT}$) of the base station (101).

16. The control device (103) of claim 15, wherein the processor (103a) is configured to reduce the first number of user equipments (105a-c) by offloading one or more of the first number of user equipments (105a-c) to a neighbouring base station.

17. The control device (103) of any one of claims 10 to 16, wherein the processor (103a) is configured to adjust the first system load ($SL_1$), in case the first system load ($SL_1$) of the base station (101) is smaller than the optimum system load ($SL_{OPT}$) of the base station (101).

18. The control device (103) of claim 17, wherein the processor (103a) is configured to increase the first system load ($SL_1$) by deactivating at least one antenna of a plurality of antennas of the base station (101) or reducing the bandwidth available for the base station (101) for communicating with the first number of user equipments (105a-c).

19. A base station (101) comprising a control device (103) according to any one of claims 10 to 18.

**Patentansprüche**

1. Verfahren (500) zum Betreiben einer Basisstation (101) eines zellularen Kommunikationsnetzes (100), wobei das Verfahren (500) umfasst:

Betreiben (501) der Basisstation (101) dazu, mit einer ersten Anzahl an Benutzergeräten (105a-c), die einen ersten Medianbenutzerdurchsatz definieren, zu kommunizieren, wobei die erste Anzahl an Benutzergeräten (105a-c) und der erste Medianbenutzerdurchsatz einer ersten Systemlast ($SL_1$) der Basisstation (101) entsprechen; und Anpassen (503) der ersten Systemlast ($SL_1$) der Basisstation (101), falls die erste Systemlast ($SL_1$) der Basisstation (101) von einer optimalen Systemlast ($SL_{OPT}$) der Basisstation (101) abweicht, wobei die optimale Systemlast ($SL_{OPT}$) der Basisstation (101) durch eine Leistungsfähigkeitsmetrik *T* definiert ist, **dadurch gekennzeichnet, dass** die Leistungsfähigkeitsmetrik *T* auf einem gewichteten Produkt der Anzahl an Benutzergeräten (105a-c) und dem Medianbenutzerdurchsatz basiert.

2. Verfahren (500) nach Anspruch 1, wobei die Leistungsfähigkeitsmetrik T durch die folgende Gleichung definiert ist:

$$T = N_{User}^{1-\rho} * \bar{T}_{PU}^{\rho},$$

wobei $N_{User}$ die Anzahl an Benutzergeräten (105a-c) bezeichnet, $\bar{T}_{PU}$ den Medianbenutzerdurchsatz bezeichnet und $\rho$ einen vordefinierten Gewichtungsparameter in dem Bereich von 0 bis 1 und verschieden von 0 oder 1 bezeichnet.

3. Verfahren (500) nach Anspruch 2, wobei das Verfahren (500) den weiteren Schritt des dynamischen Anpassens des vordefinierten Gewichtungsparameters $\rho$ als Reaktion auf sich ändernde Bedingungen des zellularen Kommunikationsnetzes (100) oder auf sich ändernde Anforderungen des Netzbetreibers umfasst.

4. Verfahren (500) nach einem der vorhergehenden Ansprüche, wobei das zellulare Kommunikationsnetz (100) ein LTE-Netz ist und wobei die Systemlast der Basisstation (101) durch den Anteil physischer Ressourcenblöcke definiert ist, die durch die Basisstation (101) verwendet werden.

5. Verfahren (500) nach einem der vorhergehenden Ansprüche, wobei die Systemlast der Basisstation (101) eine zeitgemittelte Systemlast der Basisstation (101) ist.

6. Verfahren (500) nach einem der vorhergehenden Ansprüche, wobei der Schritt (503) des Anpassens der ersten Systemlast (SL$_1$) den Schritt des Reduzierens der ersten Systemlast (SL$_1$) durch Reduzieren der ersten Anzahl an Benutzergeräten (105a-c) umfasst, falls die erste Systemlast (SL$_1$) der Basisstation (101) größer als die optimale Systemlast (SL$_{OPT}$) der Basisstation (101) ist.

7. Verfahren (500) nach Anspruch 6, wobei der Schritt des Reduzierens der ersten Anzahl an Benutzergeräten (105a-c) den Schritt des Abgebens eines oder mehrerer der ersten Anzahl an Benutzergeräten (105a-c) an eine benachbarte Basisstation umfasst.

8. Verfahren (500) nach einem der vorhergehenden Ansprüche, wobei der Schritt des Anpassens der ersten Systemlast (SL$_1$) den Schritt des Erhöhens der ersten Systemlast umfasst, falls die erste Systemlast (SL$_1$) der Basisstation (101) kleiner als die optimale Systemlast (SL$_{OPT}$) der Basisstation (101) ist.

9. Verfahren (500) nach Anspruch 8, wobei der Schritt des Erhöhens der ersten Systemlast (SL$_1$) den Schritt des Deaktivierens wenigstens einer Antenne einer Vielzahl von Antennen der Basisstation (101) oder des Reduzierens der Bandbreite, die für die Basisstation (101) zum Kommunizieren mit der ersten Anzahl an Benutzergeräten (105a-c) verfügbar ist, umfasst.

10. Steuervorrichtung (103) zum Betreiben einer Basisstation (101) eines zellularen Kommunikationsnetzes (100), wobei die Steuervorrichtung (103) umfasst:

einen Prozessor (103a), der ausgebildet ist, die Basisstation (101) zu betreiben, um mit einer ersten Anzahl an Benutzergeräten (105a-c), die einen ersten Medianbenutzerdurchsatz definieren, zu kommunizieren, wobei die erste Anzahl an Benutzergeräten (105a-c) und der erste Medianbenutzerdurchsatz einer ersten Systemlast (SL$_1$) der Basisstation (101) entsprechen; wobei der Prozessor (103a) ferner ausgebildet ist, die erste Systemlast (SL$_1$) der Basisstation (101) anzupassen, falls die erste Systemlast (SL$_1$) der Basisstation (101) von einer optimalen Systemlast (SL$_{OPT}$) der Basisstation (101) abweicht, wobei die optimale Systemlast (SL$_{OPT}$) der Basisstation (101) durch eine Leistungsfähigkeitsmetrik *T* definiert ist, **dadurch gekennzeichnet, dass** die Leistungsfähigkeitsmetrik *T* auf einem gewichteten Produkt der Anzahl an Benutzergeräten (105a-c) und dem Medianbenutzerdurchsatz basiert.

11. Steuervorrichtung (103) nach Anspruch 10, wobei die Leistungsfähigkeitsmetrik T durch die folgende Gleichung definiert ist:

$$T = N_{User}^{1-\rho} * \bar{T}_{PU}^{\rho},$$

wobei $N_{User}$ die Anzahl an Benutzergeräten (105a-c) bezeichnet, $\bar{T}_{PU}$ den Medianbenutzerdurchsatz bezeichnet und $\rho$ einen vordefinierten Gewichtungsparameter in dem Bereich von 0 bis 1 und verschieden von 0 oder 1 bezeichnet.

12. Steuervorrichtung (103) nach Anspruch 11, wobei der Prozessor (103a) ferner ausgebildet ist, den vordefinierten Gewichtungsparameter $\rho$ als Reaktion auf sich ändernde Bedingungen des zellularen Kommunikationsnetzes (100) dynamisch anzupassen.

13. Steuervorrichtung (103) nach einem der Ansprüche 10 bis 12, wobei das zellulare Kommunikationsnetz (100) ein LTE-Netz ist und wobei die Systemlast der Basisstation (101) durch den Anteil physischer Ressourcenblöcke definiert ist, die durch die Basisstation (101) verwendet werden.

14. Steuervorrichtung (103) nach einem der Ansprüche 10 bis 13, wobei der Prozessor (103a) ausgebildet ist, die Systemlast der Basisstation (101) als eine zeitgemittelte Systemlast der Basisstation (101) zu bestimmen.

15. Steuervorrichtung (103) nach einem der Ansprüche 10 bis 14, wobei der Prozessor (103a) ausgebildet ist, die erste Systemlast ($SL_1$) durch Reduzieren der ersten Systemlast ($SL_1$) anzupassen, indem die erste Anzahl an Benutzergeräten (105a-c) reduziert wird, falls die erste Systemlast ($SL_1$) der Basisstation (101) größer als die optimale Systemlast ($SL_{OPT}$) der Basisstation (101) ist.

16. Steuervorrichtung (103) nach Anspruch 15, wobei der Prozessor (103a) ausgebildet ist, die erste Anzahl an Benutzergeräten (105a-c) durch Abgeben eines oder mehrerer der ersten Anzahl an Benutzergeräten (105a-c) an eine benachbarte Basisstation zu reduzieren.

17. Steuervorrichtung (103) nach einem der Ansprüche 10 bis 16, wobei der Prozessor (103a) ausgebildet ist, die erste Systemlast ($SL_1$) anzupassen, falls die erste Systemlast ($SL_1$) der Basisstation (101) kleiner als die optimale Systemlast ($SL_{OPT}$) der Basisstation (101) ist.

18. Steuervorrichtung (103) nach Anspruch 17, wobei der Prozessor (103a) ausgebildet ist, die erste Systemlast ($SL_1$) durch Deaktivieren wenigstens einer Antenne einer Vielzahl von Antennen der Basisstation (101) oder Reduzieren der Bandbreite, die für die Basisstation (101) zum Kommunizieren mit der ersten Anzahl an Benutzergeräten (105a-c) verfügbar ist, zu erhöhen.

19. Basisstation (101), die eine Steuervorrichtung (103) nach einem der Ansprüche 10 bis 18 umfasst.

**Revendications**

1. Procédé (500) d'exploitation d'une station de base (101) d'un réseau de communication cellulaire (100), le procédé (500) comprenant les étapes consistant à :

   faire fonctionner (501) la station de base (101) pour communiquer avec un premier nombre d'équipements d'utilisateur (105a-c) définissant un premier débit médian par utilisateur, dans lequel le premier nombre d'équipements d'utilisateur (105a-c) et le premier débit médian par utilisateur correspondent à une première charge du système ($SL_1$) de la station de base (101) ; et régler (503) la première charge du système ($SL_1$) de la station de base (101), dans le cas où la première charge du système ($SL_1$) de la station de base (101) diffère d'une charge optimale du système ($SL_{OPT}$) de la station de base (101), dans lequel la charge optimale du système ($SL_{OPT}$) de la station de base (101) est définie par une métrique de performance $T$, **caractérisé en ce que** la métrique de performance $T$ est basée sur un produit pondéré du nombre des équipements d'utilisateur (105a-c) et du débit médian par utilisateur.

2. Procédé (500) selon la revendication 1, dans lequel la métrique de performance $T$ est définie par l'équation suivante : $T = N_{User}^{1-\rho} * \overline{T}_{PU}^{\rho}$,
   où $N_{User}$ désigne le nombre des équipements d'utilisateur (105a-c), $\overline{T}_{PU}$ désigne le débit médian par utilisateur et $\rho$ désigne un paramètre de pondération prédéfini compris entre 0 et 1 et différent de 0 et de 1.

3. Procédé (500) selon la revendication 2, dans lequel le procédé (500) comprend l'étape supplémentaire de réglage dynamique du paramètre de pondération prédéfini $\rho$ en réponse aux conditions changeantes du réseau de communication cellulaire (100) ou aux exigences changeantes de l'opérateur du réseau.

4. Procédé (500) selon l'une quelconque des revendications précédentes, dans lequel le réseau de communication cellulaire (100) est un réseau LTE et dans lequel la charge du système de la station de base (101) est définie par la fraction de blocs de ressources physiques utilisée par la station de base (101) .

5. Procédé (500) selon l'une quelconque des revendications précédentes, dans lequel la charge du système de la station de base (101) est une charge du système de la station de base (101) prise en moyenne dans le temps.

6. Procédé (500) selon l'une quelconque des revendications précédentes, dans lequel l'étape (503) de réglage de la première charge du système ($SL_1$) comprend l'étape consistant à réduire la première charge du système ($SL_1$) en réduisant le premier nombre des équipements d'utilisateur (105a-c), au cas où la première charge du système ($SL_1$) de la

station de base (101) est supérieure à la charge optimale du système (SL$_{OPT}$) de la station de base (101) .

7. Procédé (500) selon la revendication 6, dans lequel l'étape de réduction du premier nombre des équipements d'utilisateur (105a-c) comprend l'étape consistant à décharger un ou plusieurs équipements parmi le premier nombre d'équipements d'utilisateur (105a-c) sur une station de base avoisinante.

8. Procédé (500) selon l'une quelconque des revendications précédentes, dans lequel l'étape de réglage de la première charge du système (SL$_1$) comprend l'étape consistant à augmenter la première charge du système dans le cas où la première charge du système (SL$_1$) de la station de base (101) est inférieure à la charge optimale du système (SL$_{OPT}$) de la station de base (101) .

9. Procédé (500) selon la revendication 8, dans lequel l'étape d'augmentation de la première charge du système (SL$_1$) comprend l'étape consistant à désactiver au moins une antenne d'une pluralité d'antennes de la station de base (101) ou à réduire la bande passante disponible pour la station de base (101) afin de communiquer avec le premier nombre des équipements d'utilisateur (105a-c).

10. Dispositif de commande (103) destiné à exploiter une station de base (101) d'un réseau de communication cellulaire (100), le dispositif de commande (103) comprenant :

un processeur (103a) configuré pour faire fonctionner la station de base (101) afin de communiquer avec un premier nombre d'équipements d'utilisateur (105a-c) définissant un premier débit médian par utilisateur, dans lequel le premier nombre d'équipements d'utilisateur (105a-c) et le premier débit médian par utilisateur correspondent à une première charge du système (SL$_1$) de la station de base (101) ; dans lequel le processeur (103a) est en outre configuré pour régler la première charge du système (SL$_1$) de la station de base (101), dans le cas où la première charge du système (SL$_1$) de la station de base (101) diffère d'une charge optimale du système (SL$_{OPT}$) de la station de base (101), dans lequel la charge optimale du système (SL$_{OPT}$) de la station de base (101) est définie par une métrique de performance *T*, **caractérisé en ce que** la métrique de performance *T* est basée sur un produit pondéré du nombre des équipements d'utilisateur (105a-c) et du débit médian par utilisateur.

11. Dispositif de commande (103) selon la revendication 10, dans lequel la métrique de performance *T* est définie par l'équation suivante :

$$T = N_{User}^{1-\rho} * \overline{T}_{PU}^{\rho},$$

où $N_{User}$ désigne le nombre des équipements d'utilisateur (105a-c), $\overline{T}_{PU}$ désigne le débit médian par utilisateur et $\rho$ désigne un paramètre de pondération prédéfini compris entre 0 et 1 et différent de 0 et de 1.

12. Dispositif de commande (103) selon la revendication 11, dans lequel le processeur (103a) est en outre configuré pour régler dynamiquement le paramètre de pondération prédéfini $\rho$ en réponse aux conditions changeantes du réseau de communication cellulaire (100).

13. Dispositif de commande (103) selon l'une quelconque des revendications 10 à 12, dans lequel le réseau de communication cellulaire (100) est un réseau LTE et dans lequel la charge du système de la station de base (101) est définie par la fraction de blocs de ressources physiques utilisée par la station de base (101) .

14. Dispositif de commande (103) selon l'une quelconque des revendications 10 à 13, dans lequel le processeur (103a) est configuré pour déterminer la charge du système de la station de base (101) comme charge du système de la station de base (101) prise en moyenne dans le temps.

15. Dispositif de commande (103) selon l'une quelconque des revendications 10 à 14, dans lequel le processeur (103a) est configuré pour régler la première charge du système (SL$_1$) en réduisant la première charge du système (SL$_1$) en diminuant le premier nombre des équipements d'utilisateur (105a-c), au cas où la première charge du système (SL$_1$) de la station de base (101) est supérieure à la charge optimale du système (SL$_{OPT}$) de la station de base (101) .

16. Dispositif de commande (103) selon la revendication 15, dans lequel le processeur (103a) est configuré pour réduire le premier nombre des équipements d'utilisateur (105a-c) en déchargeant un ou plusieurs équipements parmi le premier nombre des équipements d'utilisateur (105a-c) sur une station de base avoisinante.

17. Dispositif de commande (103) selon l'une quelconque des revendications 10 à 16, dans lequel le processeur (103a) est configuré pour régler la première charge du système (SL$_1$), dans le cas où la première charge du système (SL$_1$) de la station de base (101) est inférieure à la charge optimale du système ($SL_{OPT}$) de la station de base (101).

18. Dispositif de commande (103) selon la revendication 17, dans lequel le processeur (103a) est configuré pour augmenter la première charge du système ($SL_1$) en désactivant au moins une antenne d'une pluralité d'antennes de la station de base (101) ou en réduisant la bande passante disponible pour la station de base (101) afin de communiquer avec le premier nombre des équipements d'utilisateur (105a-c).

19. Station de base (101) comprenant un dispositif de commande (103) selon l'une quelconque des revendications 10 à 18.

Fig. 1

Fig. 2

$$\rho = 0.5$$

Fig. 3

$$\rho = 0.7$$

Fig. 4

500

Operating a base station to communicate with a first number of user equipments using a first median user throughput, wherein the first number of user equipments and the first media user throughput corresponds to a first system load of the base station — 501

Adjusting the first number of user equipments or the first median user throughput for adjusting the first system load of the base station, in case the first system load of the base station differs from an optimum system load of the base station, wherein the optimum system load of the base station is defined by a maximum of a performance metric based on a product of the number of user equipments and the median user throughput. — 503

Fig. 5

EP 3 280 171 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014146700 A1